(19) Europäisches Patentamt
European Patent Office
Office européen des brevets

(11) Publication number: **0 278 255**
**A2**

# (12) EUROPEAN PATENT APPLICATION

(21) Application number: **88100598.7**

(22) Date of filing: **18.01.88**

(51) Int. Cl.4: **C08L 71/04**, C08L 25/00, C08L 67/00, C08L 69/00

(30) Priority: **04.02.87 US 10867**

(43) Date of publication of application: **17.08.88 Bulletin 88/33**

(84) Designated Contracting States: **DE FR GB IT NL**

(71) Applicant: **GENERAL ELECTRIC COMPANY**
**1 River Road**
**Schenectady New York 10022(US)**

(72) Inventor: **Brown, Sterling Bruce**
**3 Rosa Road**
**Scenectady New York 12308(US)**
Inventor: **Yates, John Bennie, III**
**38 Chrisken Drive**
**Clenmont New York 12077(US)**
Inventor: **McFay, Dennis John**
**1567 Belmont Avenue**
**Scenectady New York 12309(US)**

(74) Representative: **Catherine, Alain**
**General Electric France Service de Propriété Industrielle 18 Rue Horace Vernet B.P. 76**
**F-92134 Issy-les-Moulineaux Cédex(FR)**

## (54) Solvent-resistant, compatible polyphenylene ether-linear polyester blends.

(57) Solvent-resistanct resin blends are prepared from a polyphenylene ether, or blend thereof with a polystyrene, a linear polyester such as a poly(alkylene dicarboxylate) and at least one polymer containing a substantial proportion of aromatic polycarbonate units as a compatibilizing agent. There may also be present a minor amount of at least one epoxide and/or masked isocyanate such as triglycidyl isocyanurate or a glycidyl methacrylate polymer. The polyphenylene ether is preferably inactivated by reaction with at least one non-volatile carboxylic acid or anhydride and/or by extrusion with vacuum venting.

EP 0 278 255 A2

Xerox Copy Centre

## SOLVENT-RESISTANT, COMPATIBLE POLYPHENYLENE ETHER-LINEAR POLYESTER BLENDS

This invention relates to novel resinous compositions with high solvent resistance, tensile strength and thermal stability. More particularly, it relates to improved compositions comprising polyphenylene ethers and linear polyesters.

The polyphenylene ethers are widely used class of thermoplastic engineering resins characterized by excellent hydrolytic stability, dimensional stability, toughness, heat resistance and dielectric properties. They are also resistant to high temperature conditions under many circumstances.

A disadvantage of the polyphenylene ethers which militates against their use in many applications is their low resistance to non-polar solvents such as gasoline. For increased solvent resistance, it would be desirable to blend the polyphenylene ethers with resins which have a high degree of crystallinity and therefore are highly resistant to solvents. Illustrative of such resins are the linear polyesters including poly(alkylene dicarboxylates), especially the poly(alkylene terephthalates). However, such blends frequently undergo phase separation and delamination. They typically contain large, incompletely disperesed polyphenylene ether particles and no phase interaction between the two resin phases.

In copending, commonly owned application Serial No. 891,457, filed July 29, 1986, there are disclosed highly compatible polymer blends having a high degree of impact resistance and solvent resistance. These blends comprise at least one polyphenylene ether, or a blend thereof with at least one polystyrene; at least one poly(alkylene dicarboxylate); at least one elastomeric polyphenylene ether-compatible impact modifier; and at least one polymer containing a substantial proportion of aromatic polycarbonate units. Various other ingredients may also be present in preferred compositions within this genus.

The present invention provides similar polymer blends which are highly compatible and have high solvent resistance and favorable tensile properties. These blends are suitable for use in application where impact strength is not an important consideration.

In one of its aspects, the invention is directed to resinous compositions free from extraneous impact modifiers and comprising the following resinous components and any reaction products thereof, all percentage proportions being by weight of total resinous components:

(A) about 15-50% of at least one polyphenylene ether, or a blend thereof with at least one polystyrene;

(B) about 20-80% of at least one poly(alkylene dicarboxylate), the weight ratio of component A to component B being at most 1.2:1; and

(C) from 3% to about 50% of at least one polymer containing a substantial proportion of aromatic polycarbonate units and having a weight average molecular weight of at least about 40,000 as determined by gel permeation chromatography relative to polystyrene, or a blend thereof with a styrene hompolymer.

It is not certain whether any or all of the components in these compositions interact chemically upon belnding. Therefore, the invention includes compositions comprising said components and any reaction products thereof, as well as other optional components described hereinafter.

The polyphenylene ethers (also known as polyphenylene oxides) used as all or part of component A in the present invention comprise a plurality of structural units having the formula

(I) 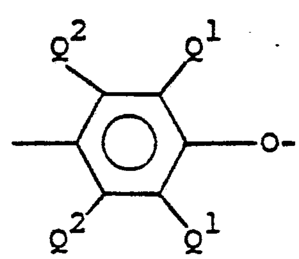 .

In each of said units independently, each $Q^1$ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl,-isobutyl, n-amyl, isoamyl, 2-methylbutyl, n-hexyl, 2,3-dimethylbutyl, 2-, 3-or 4-methylpentyl and the corresponding heptyl groups. Examples of secondary lower alkyl groups are isopropyl, sec-butyl

and 3-pentyl. Preferably, any alkyl radicals are straight chain rather than branched. Most often, each $Q^1$ is alkyl or phenyl, especially $C_{1-4}$ alkyl, and each $Q^2$ is hydrogen. Suitable polyphenylene ethers are disclosed in a large number of patents.

Both homopolymer and copolymer polyphenylene ethers are included. Suitable homopolymers are those containing, for example, 2,6-dimethyl-1,4-phenylene ether units. Suitable copolymers include random copolymers containing such units in combination with (for example) 2,3,6-trimethyl-1,4-phenylene ether units. Many suitable random copolymers, as well as homopolymers, are disclosed in the patent literature.

Also included are polyphenylene ethers containing moieties which modify propertires such as molecular weight, melt viscosity and/or impact strength. Such polymers are described in the patent literature and may be prepared by grafting onto the polyphenylene ether in known manner such vinyl monomers as acrylonitrile and vinylaromatic compounds (e.g., styrene), or such polymers as polystyrenes and elastomers. The product typically contains both grafted and ungrafted moieties. Other suitable polymers are the coupled polyphenylene ethers in which the coupling agent is reacted in known manner with the hydroxy groups of two polyphenylene ether chains to produce a higher molecular weight polymer containing the reaction product of the hydroxy groups and the coupling agent. Illustrative coupling agents are low molecular weight polycarbonates, quinones, heterocycles and formals.

The polyphenylene ether generally has a number average molecular weight within the range of about 3,000-40,000 and a weight average molecular weight within the range of about 20,000-80,000, as determined by gel permeation chromatography. Its intrinsic viscosity is most often in the range of about 0.15-0.6 and preferably at least 0.25 dl./g., as measured in chloroform at 25°C.

The polyphenylene ethers are typically prepared by the oxidative coupling of at least one corresponding monohydroxyaromatic compund. Particularly useful and readily available monohydroxyaromatic compounds are 2,6-xylenol (wherein each $Q^1$ is methyl and each $Q^2$ is hydrogen), whereupon the polymer may be characterized as a poly(2,6-di-methyl-1,4-phenylene ether), and 2,3,6-trimethylphenol (wherein each $Q^1$ and one $Q^2$ is methyl and the other $Q^2$ is hydrogen).

A variety of catalyst systems are known for the preparation of polyphenylene ethers by oxidative coupling. There is no particular limitation as to catalyst choice and any of the known catalysts can be used. For the most part, they contain at least one heavy metal compound such as a copper, manganese or cobalt compound, usually in combination with various other materials.

A first class of preferred catalyst systems consists of those containing a copper compound. Such catalysts are disclosed, for example, in U.S. Patents 3,306,874, 3,306,875, 3,914,266 and 4,028,341. They are usually combinations of cuprous or cupric ions, halide (i.e., chloride, bromide or iodide) ions and at least one amine.

Catalyst systems containing managanese compounds constitute a second preferred class. They are generally alkaline systems in which divalent manganese is combined with such anions as halide, alkoxide or phenoxide. Most often the managanese is present as a complex with one or more complexing and/or chelating agents such as dialkylamines, alkanolamines, alkylenediamines, o-hydroxyaromatic aldehydes, o-hydroxyazo compounds, $\omega$-hydroxyoximes (monomeric and polymeric), o-hydroxyaryl oximes and and $\beta$-diketones. Also useful are known cobalt-containing catalyst systems. Suitable manganese and cobalt-containing catalyst systems for polyphenylene ether preparation are known is the art by reason of disclosure in numerous patents and publications.

The polyphenylene ethers which may be used in the invention include those which comprise molecules having at least one of the end groups of the formulas

(II) 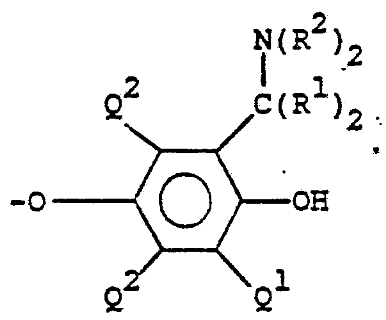 and

(III) 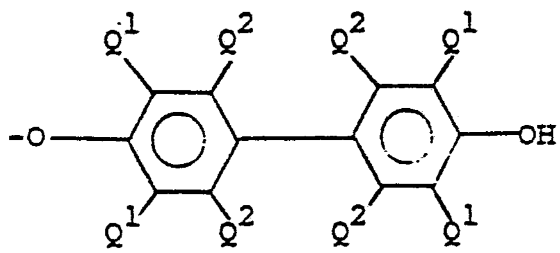 ,

wherein $Q^1$ and $Q^2$ are as previously defined; each $R^1$ is independently hydrogen or alkyl, with the proviso that the total number of carbon atoms in both $R^1$ radicals is 6 or less; and each $R^2$ is independently hydrogen or a $C_{1-6}$ primary alkyl radical. Preferably, each $R^1$ is hydrogen and each $R^2$ is alkyl, especially methyl or n-butyl.

Polymers containing the end groups of formula II (hereinafter "aminoalkyl end groups") may be obtained by incorporating an appropriate primary or secondary monoamine as one of the constituents of the oxidative coupling reaction mixture, especially when a copper-or manganese-containing catalyst is used. Such amines, especially the dialkylamines and preferably di-n-butylamine and dimethylamine, frequently become chemically bound to the polyphenylene ether, most often by replacing one of the $\alpha$-hydrogen atoms on one or more $Q^1$ radicals. The principal site of reaction is the $Q^1$ radical adjacent to the hydroxy group on the terminal unit of the polymer chain. During further processing and/or blending, the aminoalkyl end groups may undergo various reactions, probably involving a quinone methide-type intermediate of the formula

(IV) 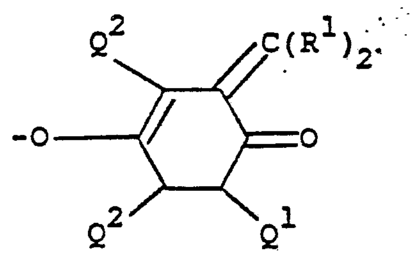 ,

with numerous beneficial effects often including an increase in impact stength and compatibilization with other blend components. Reference is made to U.S. Patents 4,054,553, 4,092,294, 4,477,649, 4,477,651 and 4,517,341 the disclosures of which are incorporated by reference herein.

Polymers with 4-hydroxybiphenyl end groups of formula III are typically obtained from reaction mixtures in which a by-product diphenoquinone of the formula

(V) 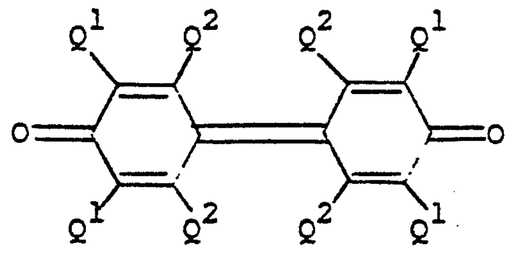

is present, especially in a copper-halide-secondary or tertiary amine system. In this regard, the disclosure of U.S. Patent 4,477,649 is again pertinent as are those of U.S. 4,234,706 and 4,482,697, which are also incorporated by reference herein. In mixtures of this type, the diphenoquinone is ultimately incorporated into the polymer in substantial proportions, largely as an end group.

In many polyphenylene ethers obtained under the above-described conditions, a substantial proportion of the polymer molecules, typically constituting as much as about 90% by weight of the polymer, contain end groups having one or frequently both of formulas II and III. It should be understood, however, that other end groups may be present and that the invention in its broadest sense may not be dependent on the molecular structures of the polyphenylene ether end groups.

It will be apparent to those skilled in the art from the foregoing that the polyphenylene ethers contemplated for use in the present invention include all those presently known, irrespective of variations in structural units or ancillary chemical features.

The use of polyphenylene ethers containing substantial amounts of unneutralized amino nitrogen may, under certain conditions, afford compositions with undesirably low impact strengths. The possible reasons for this are are explained hereinafter. The amino compounds include, in addition to the aminoalkyl end groups, traces of amine (particularly secondary amine) in the catalyst used to form the polyphenylene ether.

It has further been found that the properties of the compositions can often be improved in several respects, particularly impact strength, by removing or inactivating a substantial proportion of the amino compounds in the polyphenylene ether. Polymers so treated are sometimes referred to hereinafter as "inactivated polyphenylene ethers". They preferably contain unneutralized amino nitrogen, if any, in amounts no greater than 800 ppm. and more preferably in the range of about 200-800 ppm. Various means for inactivation have been developed and any one or more thereof may be used.

One such method is to precompound the polyphenylene ether with at least one non-volatile compound containing a carboxylic acid, acid anhydride or ester group, which is capable of neutralizing the amine compounds. This method is of particular interest in the preparation of compositions of this invention having high resistance to heat distortion. Illustrative acids, anhydrides and esters are citric acid, malic acid, agaricic acid, succinic acid, succinic anhydride, maleic acid, maleic anhydride, citraconic acid, citraconic anhydride, itaconic acid, itaconic anhydride, fumaric acid, diethyl maleate and methyl fumarate. Because of their relatively high reactivity with amino compounds, the free carboxylic acids and especially fumaric acid are generally most useful.

Reaction of the polyphenylene ether with the acid or anhydride may be achieved by heating at a temperature within the range of about 230-390°C, in solution or preferably in the melt. In general, about 0.3-2.0 and preferably about 0.5-1.5 part (by weight) of acid or anhydride is employed per 100 parts of polyphenylene ether. Said reaction may conveniently be carried out in an extruder or similar equipment.

Another method of inactivation is by extrusion of the polyphenylene ether under the above-described conditions with vacuum venting. This may be achieved either in a preliminary extrusion step (which is sometimes preferred) or during extrusion of the composition of this invention, by connecting the vent of the extruder to a vacuum pump capable of reducing the pressure to about 20 torr or less.

It is believed that these inactivation methods aid in the removal by evaporation or the neutralization of any traces of free amines (predominantly secondary amines) in the polymer, including amines generated by conversion of aminoalkyl end groups to quinone methides of the type represented by formula IV. Polyphenylene ethers having a free amine nitrogen content below about 600 ppm. have been found particularly useful in this invention. However, the invention is not dependent on any theory of inactivation.

The preparation of inactivated polyphenylene ethers by reaction with acids or anhydrides, together with vacuum venting during extrusion, is illustrated by the following examples. All parts in the examples herein are by weight.

Example 1

A mixture of 1.43 parts of maleic anhydride and 100 parts of a poly-(2,6-dimethyl-1,4-phenylene ether) having a number average molecular weight (as determined by gel permeation chromatography) of about 20,000 and an intrinsic viscosity in chloroform at 25°C of 0.46 dl./g. was tumble-mixed for 15-30 minutes and then extruded on a 20-mm. twin screw extruder at 400 rpm. over a temperature range of about 310-325°C. The feed rate of the mixture was about 524 grams per 10 minutes. The extruder was vacuum vented with a vacuum pump to a pressure less than 20 torr during the extrusion. The product was the desired inactivated polyphenylene ether.

Examples 2-3

The procedure of Example 1 was repeated, substituting 0.7 and 1.4 parts (respectively) of fumaric acid for the maleic anhydride and extruding over a temperature range of about 300-325°C. Similar products were obtained.

Example 4

The procedure of Example 2 was repeated, substituting 0.7 part of citric acid for the fumaric acid. A similar product was obtained.

Pure polyphenylene ethers are generally brittle and difficult to process by molding, extrusion and similar operations. One art-recognized means for improving processability is to blend the polyphenylene ether with a polystyrene. Thus, it is within the scope of the invention for component A to contain at least one polystyrene.

The term "polystyrene" as used herein includes polymers prepared by methods known in the art including bulk, suspension and emulsion polymerization, which contain at least 25% by weight of structural units derived from a monomer of the formula

(VI) 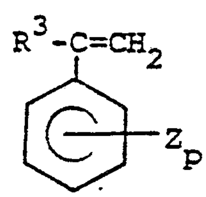

where $R^3$ is hydrogen, lower alkyl or halogen; Z is vinyl, halogen or lower alkyl; and p is from 0 to 5. These resins include homopolymers of styrene, chlorostyrene and vinyltoluene, random copolymers of styrene with one or more monomers illustrated by acrylonitrile, butadiene, α-methylstyrene, ethylvinylbenzene, divinylbenzene and maleic anhydride, and rubber-modified polystyrenes comprising blends and grafts, wherein the rubber is a polybutadiene or a rubbery copolymer of about 98-70% sytrene and about 2-30% diene monomer. These rubber-modified polystyrenes include high impact polystyrene, or HIPS.

The proportion of polystyrene in component A is not critical, since polyphenylene ethers and polystyrenes are miscible in all proportions. Component A will generally contain about 5-50% (by weight) polystyrene, if any.

Component B is at least one linear polyester. The linear polyesters include thermoplastic poly(alkylene dicarboxylates) and alicyclic analogs thereof. They typically comprise structural units of the formula

(VII) $-O-R^4-O-\overset{O}{\overset{\|}{C}}-A^1-\overset{O}{\overset{\|}{C}}-$,

wherein $R^4$ is a saturated divalent aliphatic or alicyclic hydrocarbon radical containing about 2-10 and usually about 2-6 carbon atoms and $A^1$ is a divalent aromatic radical containing about 6-20 carbon atoms. They are ordinarily prepared by the reaction of at least one diol such as ethylene glycol, 1,4-butanediol or 1,4-cyclohexanedimethanol with at least one aromatic dicarboxylic acid such as isophthalic or terephthalic acid, or lower alkyl ester thereof. The polyalkylene terphthalates, particularly polyethylene and polybutylene terephthalate and especially the latter, are preferred. Such polyesters are known in the art as illustrated by the following patents:

2,465,319 3,047,539

2,720,50s 3,671,487
2,727,881 3,953,394
2,822,348 4,128,526.

Because of the tendency of polyesters to undergo hydrolytic degradation at the high extrusion and molding temperatures encountered by the compositions of this invention, it is preferred that the polyester used as component B be substantially free of water.

The polyesters generally have number average molecular weights in the range of about 20,000-70,000, as determined by intrinsic viscosity (IV) at 30°C in a mixture of 60% (by weight) phenol and 40% 1,1,2,2-tetrachloroethane. When resistance to heat distortion is an important factor the polyester molecular weight should be relatively high, typically above about 40,000.

Because of the presence of both poly(alkylene dicarboxylates) and polymers containing carbonate units in the compositions of this invention, there is a possibility for exter-carbonate exchange resulting in degradation of one or both polymers, particularly at high molding temperatures. It is, therefore, sometimes preferred to incorporate in the compositions an agent which suppresses such exchange, typically in the amount of about 0.01-7.5% by weight of total polyester. It is generally preferred to precompound said exchange suppressing agent with the polyester. Precompounding may be achieved by direct blending or by forming a concentrate, typically with about 1-25% by weight of the polyester, and adding said concentrate to the remaining portion thereof.

Illustrative exchange suppressing agents are hydroxyaromatic compounds such as the hydroxybenzophenones disclosed in U.S. Patent 4,452,932; salicylate compounds such as methyl salicylate, disclosed in U.S. Patent 4,452,933; and sodium and potassium dihydrogen phosphates disclosed in U.S. Patent 4,532,290. The disclosures of all of the foregoing patents relating to polyesters are also incorporated by reference herein.

According to the present invention, the tendency of blends of components A and B to be incompatible is overcome by incorporating component C in the composition. The essential ingredient of component C is a polymer containing a substantial proportion of aromatic polycarbonate units.

Among the preferred polymers of this type are the aromatic polycarbonate homopolymers. The structural units in such homopolymers generally have the formula

$$\text{(VIII)} \quad -O-A^2-O-\overset{O}{\overset{\|}{C}}-,$$

wherein $A^2$ is an aromatic radical. Suitable $A^2$ values include m-phenylene, p-phenylene, 4,4'-biphenylene, 2,2-bis(4-phenylene)propane, 2,2-bis(3,5-dimethyl-4-phenylene)-propane and similar radicals such as those which correspond to the dihydroxyaromatic compounds disclosed by name or formula (generic or specific) in U.S. Patent 4,217,438. Also included are radicals containing non-hydrocarbon moieties. These may be substitutents such as chloro, nitro, alkoxy and the like, and also linking radicals such as thio, sulfoxy, sulfone, ester, amide, ether and carbonyl. Most often, however, all $A^2$ radicals are hydrocarbon radicals.

The $A^2$ radicals preferably have the formula

$$\text{(IX)} \quad -A^3-Y-A^4-,$$

wherein each of $A^3$ and $A^4$ is a single-ring divalent aromatic radical and Y is a bridging radical in which one or two atoms separate $A^3$ from $A^4$. The free valence bonds in formula IX are usually in the meta or para positions of $A^3$ and $A^4$ in relation to Y. Such $A^2$ values may be considered as being derived from bisphenols of the formula $HO-A^3-Y-A^4OH$. Frequent reference to bisphenols will be made hereinafter, but it should be understood that $A^2$ values derived from suitable compounds other than bisphenols may be employed as appropriate.

In formula IX, the $A^3$ and $A^4$ values may be unsubstituted phenylene or substituted derivatives thereof, illustrative substituents (one or more) being alkyl, alkenyl (e.g., crosslinkable-graftable moieties such as vinyl and allyl), halo (especially chloro and/or bromo), nitro, alkoxy and the like. Unsubstituted phenylene radicals are preferred. Both $A^3$ and $A^4$ are preferably p-phenylene, although both may be o-or m-phenylene or one o-or m-phenylene and the other p-phenylene.

The bridging radical, Y, is one in which one or two atoms, preferably one, separate $A^3$ from $A^4$. It is most often a hydrocarbon radical and particularly a saturated radical such as methylene, cyclohexylmethylene, 2-[2.2.1]-bicycloheptylmethylene, ethylene, 2,2-propylene, 1,1-(2,2-dimethylpropylene), 1,1-cyclohexylene, 1,1-cyclopentadecylene, 1,1-cyclododecylene or 2,2-adamantylene, especially a gem-alkylene radical. Also included, however, are unsaturated radicals and radicals which are entirely or partially composed of atoms other than carbon and hydrogen. Examples of such radicals are 2,2-dichloroethylidene, carbonyl, thio and sulfone. For reasons of availability and particular suitability for the purposes of this invention, the preferred radical of formula VIII is the 2,2-bis(4-phenylene)-propane radical, which is derived from bisphenol A and in which Y is isopropylidene and $A^3$ and $A^4$ are each p-phenylene.

Various methods of preparing polycarbonate homopolymers are known, and any of them may be used for preparing component C. They include interfacial and other methods in which phosgene is reacted with bisphenols, transesterification methods in which bisphenols are reacted with diaryl carbonates, and methods involving conversion of cyclic polycarbonate oligomers to linear polycarbonates. The latter method is disclosed in U.S. Patent 4,605,731, European Patent Application 162,379 and copending, commonly owned application Serial No. 704,122, filed February 22, 1985, now U.S. Patent 4,644,053.

Various copolycarbonates are also useful as component C. One example thereof is the polyester-polycarbonates of the type obtained by the reaction of at least one dihydroxyaromatic compound with a mixture of phosgene and at least one dicarboxylic acid chloride, especially isophthaloyl chloride, terephthaloyl chloride or both. Such polyester-polycarbonates contain structural units of formula VIII combined with units of the formula

(X) $-O-\overset{\overset{O}{\|}}{C}-A^5-\overset{\overset{O}{\|}}{C}-,$

wherein $A^5$ is an aromatic and usually a p-or m-phenylene radical. Other examples are the siloxane-carbonate block copolymers disclosed, for example, in U.S. Patents 3,189,662 and 3,419,634, and the polyphenylene ether-polycarbonate block copolymers of U.S. Patents 4,374,223 and 4,436,876, which frequently provide compositions with substantially higher heat distortion temperatures than those containing homopolycarbonates. The disclosures of the patents and applications listed above relating to polycarbonates and copolycarbonates are also incorporated by reference herein.

The copolycarbonates should, for the most part, contain at least about 20% by weight of carbonate structural units. When the copolymeric units are other than ester units, the polymer preferably contains at least about 45% carbonate units.

The weight average molecular weight of the homo-or copolycarbonate should be at least about 40,000 (as determined by gel permeation chromatography relative to polystyrene). It is most often in the range of about 40,000-80,000 and especially about 50,000-80,000. However, compositions in which component C has a molecular weight in the range of about 80,000-200,000 often have favorable properties.

In most instances, component C consists of the polycarbonate or copolycarbonate; that is, said polymer is the entire component except for impurities. It is within the scope of the invention, however, to use as component C a blend of a polycarbonate or polyester-polycarbonate with a styrene homopolymer, typically having a number average molecular weight of about 50,000-250,000. Such blends generally contain at least 50% of the polycarbonate or polyester-polycarbonate.

It will be noted that various polystyrenes may be used in the invention as all or part of components A and C. However, the specific polystyrenes used may be different. The polystyrene in component A is a homopolymer, random copolymer or rubber-modified polystyrene, and homopolymers are used in component C. Moreover, polystyrenes are ordinarily present in only one of components A and C, if in either.

It is also within the scope of the invention to employ a polyester-aromatic polycarbonate blend as a source of part or all of components B and C. The use of such a blend may provide somewhat more flexibility in component proportions.

Particularly in compositions containing inactivated polyphenylene ethers and relatively small amounts of polycarbonate, it is frequently found that resistance to heat distortion is improved if there is also blended into the composition (D) at least one compound selected from those containing at least one cyanurate or isocyanurate moiety and those containing a plurality of epoxide moieties. Illustrative cyanurates and isocyanurates are cyanuric chloride, triethyl cyanurate, triallyl cyanurate, triallyl isocyanurate and triphenyl cyanurate. Epoxide compounds include homopolymers of such compounds as glycidyl acrylate and glycidyl methacrylate, as well as copolymers thereof, preferred comonomers being lower alkyl acrylates, methyl methacrylate, acrylonitrile and styrene. Also useful are epoxy-substituted cyanurates and isocyanurates such as triglycidyl isocyanurate.

An essential feature of the invention is the absence of extraneous impact modifiers; that is, of polymers which improve impact strength and which are not defined herein as suitable constituents of one of the components of the composition. Such impact modifiers are typically elastomeric polymers, including such materials as styrene-butadiene diblock and triblock polymers. Compositions containing such impact modifiers are disclosed and claimed in the aforementioned application Serial No. 891,457. The invention is based in part on the discovery that compositions free from extraneous impact modifiers are suitable for use when impact strength is not critical but such factors as tensile properties are important. Typical areas of use are for under-hood automotive components, especially electrical connectors, and internal parts for computers.

In various respects, the proportions of ingredients in the compositions of this invention are an important consideration. As previously mentioned, the proporations of components A and B are about 15-50% and about 20-80%, repsectively, and that of component C is from 3% to about 50%. The preferred ranges are

about 2040% for component A, about 50-75% for component B and about 5-20% for component C. Component D, when employed, is generally present in the amount of about 0.1-5 parts per 100 parts of resinous components.

The chemical roles of the inactivated polyphenylene ether and of component D in the compositions of this invention are not fully understood, and any reliance on chemical theory as a basis for the invention is specifically disclaimed. It is believed, however, that the presence of more than a certain minimum proportion of amino compounds in the polyphenylene ether can cause degradation in the molecular weight of the polycarbonate. Such amino compounds include, in addition to the aminoalkyl end groups, traces of amines (particularly secondary amine) in the catalyst used to form the polyphenylene ether. If this is true, the removal or neutralization of the greater part of such amino compounds produces an environment in which high molecular weight is maintained in the polycarbonate, thus maximizing its effect as a compatibilizing agent.

The compositions of this invention have been shown by scanning electron microscopy to consist essentially of particles of polyphenylene ether (component A) dispersed in a continuous polyester-containing phase. The size and shape of said particles varies with such factors as the proportion of polyphenylene ether in the compositions. By reason of the size and shape of the disperse phase particles and/or their degree of adhesion to the continuous phase, the compositions are highly resistant to delamination and similar types of failure under stress.

It is within the scope of the invention for the composition to contain other conventonal ingredients such as fillers, reinforcing materials (e.g, glass fibers), flame retardants, pigments, dyes, stabilizers, anti-static agents, mold release agents and the like. Also included are processability modifiers for component A, such as olefin copolymers. In general, the amounts of any other resinous components, if present, will not exceed about 15% by weight of total resin.

The preparation of the compositions of this invention is normally achieved by merely blending the ingredients thereof under conditions adapted for the formation of an intimate blend. Such conditions often include extrusion, which may be conveniently effected in a screw-type or similar extruder which applies a substantial shearing force to the composition, thereby decreasing the particle size thereof. The extrusion temperature is generally in the range of about 100°-325°C.

In one embodiment of the invention, a single extruder is employed which has at least two ports for introduction of ingredients, one such port being downstream from the other. Component A or any reactants for preparation thereof is introduced through the first port and extruded, preferably at a temperature in the range of about 300-350°C. This portion of the extruder is preferably vacuum vented.

The remaining ingredients are introduced through the downstream port and extrusion is continued, preferably at a lower temperature to minimize degradation of component B. Typical extrusion temperatures at this stage are in the range of about 260-320°C.

In the following examples illustrating the inventions, the blend constituents used were as follows:

<u>Component A</u>

PPE -a poly(2,6-dimethyl-1,4-phenylene ether) having a number average molecular weight of about 20,000 and an intrinsic viscosity in chloroform at 25°C of 0.46 dl./g; it was found to contain about 1000 ppm. nitrogen.

Example 2, etc. - the products of the designated examples. The product of Example 2 contained about 600 ppm. nitrogen.

PPE-VV - PPE which has been extruded on a twin screw extruder within the temperature range of about 300-315°C, with vacuum venting to a maximum pressure of 20 toor; it contained 438 ppm. nitrogen.

HIPS - American Hoechst 1897 rubber modified polystyrene.

<u>Component B</u>

PBT - a poly(butylene terephthalate) having a number average molecular weight, as determined by gel permeation chromatography, of about 50,000.

PBT-ES - PBT containing $NaH_2PO_4$ as an exchange-suppressing agent. The $NaH_2PO_4$ was preblended with a portion of the polyester to a level of 1.8% by weight, after which 20% of said polyester was blended with untreated polyester.

Component C

PC(50,000), PC(71,000), PC(192,000) - bisphenol A homopolycarbonates prepared interfacially and having weight average molecular weights of about 50,000, 71,000 and 192,000, respectively.

PPE-PC - a block poly(2,6-dimethyl-1,4-phenyleneether)-bisphenol A polycarbonate copolymer in which the two blocks have approximately equal molecular weights.

Component D

TGIC - triglycidyl isocyanurate.

Percentages and other proportions are by weight and are based on total resinous constituents. Tensile values were determined in British units and have been converted to metric units.

Examples 5-12

A series of compositions according to the invention was prepared by tumble mixing the ingredients in a jar mill and extruding at 265°C on a twin screw extruder with a screw speed of 400 rpm. The extrudate was quenched in water and pelletized, and the pellets were injection molded into test bars.

The relevant parameters are given in Table I.

TABLE I

| Example | 5 | 6 | 7 | 8 | 9 | 10 | 11 | 12 |
|---|---|---|---|---|---|---|---|---|
| Component A, %: | | | | | | | | |
| PPE | 40 | 45 | 25 | -- | -- | -- | -- | -- |
| PPE-VV | -- | -- | -- | 19.8 | 19.8 | 47.5 | 45 | 42.5 |
| Component B, %: | | | | | | | | |
| PBT | 40 | 45 | -- | 66.8 | 66.8 | 47.5 | 45 | 42.5 |
| PBT-ES | -- | -- | 33.3 | -- | -- | -- | -- | -- |
| Component C, %: | | | | | | | | |
| PC(50,000) | 20 | 10 | 41.7 | 13.4 | -- | -- | -- | -- |
| PC(71,000) | -- | -- | -- | -- | -- | 5.0 | 10 | 15.0 |
| PPE-PC | -- | -- | -- | -- | 13.4 | -- | -- | -- |

Examples 13-22

The procedure of Examples 5-12 was repeated, using various other combinations of ingredients. In Examples 17-20, conventional antioxidants were also present in effective amounts. Tensile measurements were made according to ASTM procedures.

The relevant parameters and test results are given in Table II, in comparison with a control containing no polycarbonate.

TABLE II

| Example | 13 | 14 | 15 | 16 | 17 | 18 | 19 | 20 | 21 | 22 | Control |
|---|---|---|---|---|---|---|---|---|---|---|---|
| Component A, %: | | | | | | | | | | | |
| PPE | -- | -- | -- | -- | -- | -- | -- | -- | 21.4 | 21.4 | -- |
| PPE-VV | -- | -- | -- | -- | 34.9 | 44 | 34.9 | 20 | -- | -- | 60.5 |
| Example 2 | 45.5 | 19.8 | 19.8 | -- | -- | -- | -- | -- | -- | -- | -- |
| Example 3 | -- | -- | -- | 45.8 | -- | -- | -- | -- | -- | -- | -- |
| HIPS | -- | -- | -- | -- | -- | -- | -- | -- | 14.3 | 14.3 | -- |
| Component B, %: | | | | | | | | | | | |
| PBT | 45.5 | 66.8 | 66.8 | 45.8 | 53.5 | 46 | 53.5 | 71 | 28.6 | -- | 39.5 |
| PBT-ES | -- | -- | -- | -- | -- | -- | -- | -- | -- | 28.6 | -- |
| Component C, %: | | | | | | | | | | | |
| PC(50,000) | 9.0 | 13.4 | -- | 8.4 | -- | -- | -- | -- | 35.7 | 35.7 | -- |
| PC(71,000) | -- | -- | -- | -- | 11.6 | 10 | 11.6 | 9 | -- | -- | -- |
| PC(192,000) | -- | -- | 13.4 | -- | -- | -- | -- | -- | -- | -- | -- |
| Component D: TGIC, phr. | -- | -- | -- | 0.5 | -- | -- | -- | -- | | | |
| Tensile strength, MPa.: | | | | | | | | | | | |
| At yield | -- | -- | -- | -- | -- | -- | 56.6 | 52.7 | -- | -- | 4.1 |
| At break | -- | -- | -- | -- | -- | -- | 40.3 | 35.4 | -- | -- | 26.9 |
| Tensile elongation, % | -- | -- | -- | -- | -- | -- | 50 | 185 | -- | -- | 5 |

## Claims

1. A resinous composition free from extraneous impact modifiers and comprising the following resinous components and any reaction products thereof, all percentage proportions being by weight of total resinous components:

(A) about 15-50% of at least one polyphenylene ether, or a blend thereof with at least one polystyrene;

(B) about 20-80% of at least one poly(alkylene dicarboxylate), the weight ratio of component A to component B being at most 1.2:1; and

(C) from 3% to about 50% of at least one polymer containing a substantial proporation of aromatic polycarbonate units and have a weight average molecular weight of at least about 40,000 as determined by gel permeation chromatography relative to polystyrene, or a blend thereof with a sytrene homopolymer.

2. A composition according to claim 1 wherein component A is a blend of said polyphenylene ether with said polystyrene.

3. A composition according to claim 2 wherein the polyphenylene ether is a poly(2,6-dimethyl-1,4-phenylene ether).

4. A composition according to claim 3 wherein the polystyrene is a homopolymer.

5. A composition according to claim 3 wherein the polystyrene is a rubber-modified polystyrene.

6. A composition according to claim 1 wherein component A is a poly(2,6-dimethyl-1,4-phenylene ether).

7. A composition according to claim 6 wherein component B is a poly(ethylene terephthalate) or a poly-(butylene terephthalate) and the plycarbonate units in component D are bisphenol A polycarbonate units.

8. A composition according to claim 7 wherein component B is a poly(butylene terephthalate) having a number average molecular weight in the range of about 20,000-70,000.

9. A composition according to claim 8 wherein component B contains an agent which suppresses ester-carbonate exchange.

10. A composition according to claim 9 wherein the exchange suppressing agent is sodium dihydrogen phosphate.

11. A composition according to claim 8 wherein the proporaiton of component A is about 20-40%, that of component B is about 50-75% and that of component C is about 5-20%.

12. A composition according to claim 11 wherein component C is a polycarbonate homopolymer having a weight average molecular weight in the range of about 40,000-200,000.

13. A composition according to claim 11 wherein component C is a polyester-polycarbonate.

14. A composition according to claim 11 wherein component C is a poly(2,6-dimethyl-1,4-phenylen ether)-polycarbonate block copolymer.

15. A composition according to claim 8 wherein the polyphenylene ether contains no more than 800 ppm. of unneutralized amino nitrogen and has an intrinsic viscosity of at least 0.25 as measured in chloroform at 25°C.

16. A composition according to claim 15 wherein component A is a polyphenylene ether which has been inactivated by at least one of precompounding with at least one non-volatile compound containing a carboxylic acid, acid anhydride or ester group and extrusion with vacuum venting.

17. A composition according to claim 16 wherein there is also present (D) at least one compound selected from those containing at least one cyanurate or isocyanurate moiety and those containing a plurality of epoxide moieties, in the amount of about 0.1-5.0 parts per 100 parts of resinous components.

18. A composition according to claim 17 wherein component D is triallyl cyanurate, triallyl isocyanurate, triphenyl cyanurate or triglycidyl isocyanurate.